# FASCICULE DE BREVET EUROPEEN

(11) **EP 2 851 320 B1**
(45) Date de publication et mention de la délivrance du brevet: **09.11.2016**
(21) Numéro de dépôt: 14186274.8
(22) Date de dépôt: 24.09.2014
(51) Int. Cl.: B65G 69/00

(54) **Dispositif de cale d'immobilisation de véhicule**
Keilvorrichtung als Wegfahrsperre für Fahrzeug
Wedge device for immobilising a vehicle

(30) Priorité: 24.09.2013 FR 1359152
(43) Date de publication de la demande: 25.03.2015
(73) Titulaire: Glomot-Penot Systemes, 87290 Saint-Sorlin-Leulac (FR)
(72) Inventeur: Penot, Etienne, 87290 SAINT-SORNIN-LEULAC (FR)
(74) Mandataire: Chaillot, Geneviève

(56) Documents cités:
- WO-A2-01/43526
- US-A- 5 896 957
- US-A1- 2005 133 315

## Description

L'invention a pour objet un dispositif de cale d'immobilisation de véhicule, en particulier pour des camions, lors de leur chargement ou de leur déchargement.

Les camions sont habituellement chargés/déchargés par des caristes, qui entrent à l'intérieur d'un camion garé devant un quai de chargement/déchargement pour charger ou décharger des marchandises. Bien qu'il existe des systèmes de feux indiquant au conducteur du camion lorsque l'opération du cariste à l'intérieur du camion est terminée, il arrive parfois que le camion parte avant que le cariste ne soit sorti du camion, ce qui provoque des accidents.

De plus, il peut être utile de caler le camion pour éviter qu'il ne bouge trop pendant les allers et retours du cariste dans le camion.

On connaît des systèmes de calage perfectionnés, tels que le système Calematic, objet du brevet français 9806769/FR2779137 au nom du présent déposant, dans lequel la cale sort du sol actionnée par un vérin commandé automatiquement.

On connaît également des systèmes de calage dans lesquels une ou plusieurs roues du camion sont calées par une cale latérale. Un tel système de calage est décrit dans la demande internationale de brevet PCT WO2010/090884. Un autre exemple d'un tel système est donné dans la demande internationale WO 01/43526 A2, qui décrit un dispositif de blocage de roue selon le préambule de la revendication 1 et qui comprend une piste de guidage fixée au sol et dans laquelle un chariot coulisse, sous l'action d'une tige filetée, par l'intermédiaire de roulettes. Le chariot comprend un élément transversal destiné à venir en butée contre la roue d'un véhicule.

L'inconvénient de tels systèmes est, entre autres, qu'entre le moment où le camion arrive sur le quai et celui où il en repart, le poids qu'il transporte a changé, ce qui a une influence sur la position des roues du camion à l'arrêt. Ainsi, une cale placée contre la roue d'un camion à l'arrêt vide peut se retrouver coincée par le pneu du même camion chargé, et donc difficile à retirer.

Pour résoudre ce problème, le déposant a conçu un dispositif de cale d'immobilisation simple, facile à installer et peu coûteux, permettant de retirer la cale même lorsque la position de la roue calée a changé en raison de la différence de chargement du camion entre son arrivée au quai et son départ de celui-ci.

La présente invention a ainsi pour objet un dispositif de cale d'immobilisation d'un véhicule dans un emplacement de chargement/déchargement, comprenant un support destiné à être fixé au sol, au voisinage de l'emplacement de chargement/déchargement, un ensemble poutre relié au support et ayant une région d'extrémité avant et une région d'extrémité arrière opposées l'une à l'autre dans la direction longitudinale de l'ensemble poutre, et une cale, de préférence manuelle, ayant une partie allongée, dite d'arrêt, solidaire d'une partie de pose sur l'ensemble poutre de telle sorte que lorsque la partie de pose est disposée sur l'ensemble poutre, la partie d'arrêt est placée dans une position dans laquelle elle s'étend à partir de l'ensemble poutre et dans l'emplacement de chargement/déchargement pour former un arrêt contre lequel vient buter une roue d'un véhicule qui a été placé dans l'emplacement de chargement/déchargement, et des moyens de blocage de la position de la cale sur l'ensemble poutre de façon à ainsi empêcher le véhicule de se déplacer à l'encontre de la partie d'arrêt, le dispositif de cale d'immobilisation étant caractérisé par le fait que l'ensemble poutre est déplaçable en translation par rapport au support dans la direction longitudinale de l'ensemble poutre et par le fait que la partie de pose porte des moyens de blocage par arc-boutement sur l'ensemble poutre, constituant les moyens de blocage de la position de la cale sur l'ensemble poutre, pour maintenir la cale immobile par rapport à l'ensemble poutre lorsqu'une force parallèle à la direction longitudinale de l'ensemble poutre et orientée dans le sens d'arc-boutement est exercée sur la partie d'arrêt, bloquant ainsi en position le dispositif de cale d'immobilisation, étant prévus des moyens de limitation du déplacement de l'ensemble poutre lors de l'application de ladite force, le déblocage de la cale, permettant ainsi son retrait de l'ensemble poutre, étant obtenu par translation de l'ensemble poutre suivant la direction longitudinale de l'ensemble poutre et dans le sens d'arc-boutement.

En pratique, le sens d'arc-boutement correspond au sens allant à l'opposé du quai de chargement. Ainsi, dans le cas où le dispositif de cale d'immobilisation est disposé de telle sorte que sa région d'extrémité arrière se trouve côté quai, alors le sens d'arc-boutement sera le sens orienté de la région d'extrémité arrière vers la région d'extrémité avant de l'ensemble poutre.

On souligne ici que, comme indiqué ci-dessus, les moyens de blocage par arc-boutement « constituent » les moyens de blocage de la position de la cale sur l'ensemble poutre, ce qui exclut la présence d'autres moyens de blocage de la position de la cale sur l'ensemble poutre. En d'autres termes, la cale est bloquée sur l'ensemble poutre uniquement par les moyens de blocage par arc-boutement.

Par ailleurs, on entend par « manuelle » que la cale est à rapporter sur l'ensemble poutre à chaque fois par l'utilisateur après que le véhicule s'est arrêté dans l'emplacement de chargement/déchargement.

Selon un mode de réalisation de l'ensemble poutre et de la cale, l'ensemble poutre est formé par une poutre de section transversale parallélépipédique, ayant une face supérieure tournée à l'opposé du sol après que le support est fixé au sol, une face inférieure opposée à la face supérieure, et deux faces latérales opposées reliant les faces supérieure et inférieure, et la partie de pose de la cale est agencée pour s'arc-bouter sur la poutre par contact avec chacune des deux faces latérales.

Par exemple, la partie de pose peut être formée par un coulisseau en U dont la traverse se situe sur la face supérieure de la poutre et les jambages chacun en regard de l'une des faces latérales de la poutre.

De préférence, la partie de pose sera formée par une console comprenant une platine, située sur la face supérieure de la poutre, et deux ailes s'étendant à partir de la platine, chaque aile étant en regard d'une face respective parmi les deux faces latérales de la poutre et présentant un bord, dit de contact, perpendiculaire à la platine, les bords de contact étant décalés l'un de l'autre dans la direction longitudinale de la poutre pour permettre l'arc-boutement de la partie de pose sur la poutre par contact de chacun des bords de contact avec la face latérale respective de la poutre.

Le dispositif de cale d'immobilisation comprend avantageusement des moyens formant butée contre la poutre pour empêcher que la partie de pose ne soit séparée de la poutre par soulèvement, les moyens formant butée étant, de préférence, formés par les régions d'extrémité libre de chaque aile qui s'achèvent chacune en un retour perpendiculaire au bord de contact de ladite aile, le retour étant dirigé vers l'autre aile et se situant sous la face inférieure de la poutre.

Un demi-cavalier de renfort peut être solidaire de chaque aile et de la platine de la console, les demi-cavaliers de renfort étant perpendiculaires aux ailes et à la platine.

Selon un autre mode de réalisation de l'ensemble poutre et de la cale, l'ensemble poutre est formé par deux profilés plats parallèles, en regard et espacés l'un de l'autre, et la partie de pose de la cale se présente sous la forme d'une plaque à partir d'une face de laquelle s'étend la partie d'arrêt, de préférence perpendiculairement, la plaque étant reçue verticalement dans l'espace formé entre les deux profilés plats pour permettre l'arc-boutement de la partie de pose sur l'ensemble poutre par contact de chacun des deux bords verticaux de la plaque avec l'un respectif des profilés plats.

La distance entre les deux profilés plats, mesurée selon la normale aux profilés plats, peut se situer dans la plage allant de 10 à 100 mm.

Avantageusement, la plaque formant la partie de pose est munie de moyens pour orienter la plaque dans une position favorisant un blocage de la cale par arc-boutement, position dans laquelle la plaque est verticale, le bord vertical de la plaque qui est situé côté région d'extrémité arrière de l'ensemble poutre est en contact avec le profilé plat qui se trouve sur le côté duquel s'étend la partie d'arrêt de la cale, et le bord vertical de la plaque qui est situé côté région d'extrémité avant de l'ensemble poutre est en contact avec l'autre profilé plat.

Lesdits moyens d'orientation peuvent notamment être formés par quatre pièces en coin, deux pièces en coin s'étendant à partir de chaque face de la plaque formant la partie de pose de la cale, en partie supérieure des faces, chacune des quatre pièces en coin présentant un bord extérieur incliné de contact avec le bord supérieur de l'un des profilés plats formant l'ensemble poutre, l'extrémité supérieure du bord extérieur étant plus écartée de la face respective de la plaque que l'extrémité inférieure dudit bord extérieur, l'angle d'inclinaison du bord extérieur de l'une des deux pièces en coin du même côté de la plaque, dit grande pièce en coin, étant supérieur à celui de l'autre pièce en coin, dite petite en coin, la grande pièce en coin et la petite pièce en coin se trouvant côté partie d'arrêt de la plaque étant côté région d'extrémité respectivement avant et arrière de l'ensemble poutre, et la grande pièce en coin et la petite pièce en coin se trouvant de l'autre côté de la plaque étant côté région d'extrémité respectivement arrière et avant de l'ensemble poutre.

La partie d'arrêt peut se présenter sous la forme d'une barre, de préférence en titane ou alliage de titane. Dans ce cas, la partie de pose peut être réalisée en un autre matériau que le titane, ou peut également être en titane ou alliage de titane.

La partie d'arrêt peut également se présenter sous la forme d'une pale présentant une face incurvée conformée pour épouser la bande de roulement de la roue d'un véhicule bloqué par le dispositif de cale d'immobilisation, la pale et la partie de pose étant, de préférence, respectivement en matériau composite et en titane ou alliage de titane.

L'utilisation de titane ou d'alliage de titane permet d'avoir une barre ou une partie de pose de dimensions et poids moins importantes, comme par exemple d'une section transversale moins importante, pour une même résistance par rapport à une barre ou une partie de pose en un autre matériau.

Selon un autre aspect de l'invention, est proposé un système de calage de véhicule ou une cale d'immobilisation de véhicule, apte à être relié à un support immobile pour former un arrêt contre lequel vient buter une roue d'un véhicule qu'il s'agit d'immobiliser, et apte à être bloqué en position par rapport au support afin d'empêcher le véhicule de se déplacer à l'encontre du système de calage ou de de la cale, caractérisé par le fait que le système de calage ou la cale est réalisé en titane ou alliage de titane. Le système de calage ou la cale selon cet aspect de l'invention n'est pas limité à un blocage par arc-boutement sur un ensemble poutre, mais pourrait être relié à un support par tout autre moyen approprié, comme par exemple par un système à crémaillère tel que celui décrit dans la demande internationale de brevet PCT WO2010/090884.

Comme indiqué ci-dessus, l'utilisation de titane ou d'alliage de titane permet de proposer un système de calage ou une cale de poids léger, et donc facilement manipulable par un opérateur, tout en présentant une résistante suffisante pour supporter la force exercée par la roue du véhicule.

Comme indiqué ci-dessus, le dispositif de cale d'immobilisation selon la présente invention comprend des moyens de limitation du déplacement de l'ensemble poutre lorsqu'une force orientée dans le sens d'arc-boutement est exercée sur la partie d'arrêt, à savoir par la roue du véhicule qu'il s'agit de bloquer.

Les moyens de limitation peuvent être agencés pour interdire tout déplacement de l'ensemble poutre lors de l'application de ladite force, quelle que soit la grandeur de ladite force.

En variante, les moyens de limitation sont avantageusement agencés pour autoriser, lorsqu'une force exercée sur la partie d'arrêt dépasse une valeur de seuil donnée, un déplacement de l'ensemble poutre en translation dans le sens d'arc-boutement, tout en permettant l'arc-boutement de la partie de pose sur l'ensemble poutre.

Ladite valeur de seuil sera définie en fonction de la résistance mécanique des pièces du dispositif, telles que l'ensemble poutre, susceptibles de rompre suite à l'application de la force par la roue. De cette manière, lorsque la roue exerce sur la barre une force susceptible d'endommager l'une des pièces du dispositif, l'ensemble poutre peut se déplacer légèrement de façon à relâcher l'effort exercé sur la barre. On évite d'avoir ainsi un système mécanique trop rigide.

Cette valeur de seuil est aussi définie en fonction de la force nécessaire pour maintenir le camion contre le quai.

Conformément à la variante mentionnée ci-dessus, les moyens de limitation peuvent être formés par un ressort dont une extrémité est solidaire du support et dont l'autre extrémité est solidaire de l'ensemble poutre, le ressort étant agencé pour solliciter l'ensemble poutre dans le sens opposé au sens d'arc-boutement et précontraint à ladite valeur de seuil, et/ou formés par un vérin dont le corps est solidaire de l'un parmi le support et l'ensemble poutre et dont la tête est solidaire de l'autre du support et de l'ensemble poutre, le vérin étant piloté pour s'opposer au déplacement de l'ensemble poutre en translation dans le sens d'arc-boutement lorsque la force exercée sur la partie d'arrêt est inférieure à la valeur de seuil et pour autoriser le déplacement de l'ensemble poutre dans le sens d'arc-boutement lorsque ladite force est supérieure à la valeur de seuil.

On entend donc par « moyens de limitation » des moyens permettant de limiter le déplacement de l'ensemble poutre à un déplacement nul ou à un déplacement de quelques centimètres, tout en permettant à la partie de pose de s'arc-bouter sur l'ensemble poutre pour bloquer en position la cale.

Egalement dans un souci d'éviter la rupture mécanique du dispositif, et en particulier de l'ensemble poutre, l'ensemble poutre est avantageusement relié au support par des moyens de liaison agencés de telle sorte qu'une translation de l'ensemble poutre dans le sens d'arc-boutement entraîne une rotation simultanée de l'ensemble poutre, autour de son axe central longitudinal, vers le côté opposé à celui duquel s'étend la partie d'arrêt, tandis qu'une translation de l'ensemble poutre dans le sens opposé au sens d'arc-boutement entraîne une rotation de l'ensemble poutre vers le côté duquel s'étend la partie d'arrêt.

Ainsi, lorsque la force exercée par la roue dépasse la valeur de seuil, l'ensemble poutre peut à la fois se déplacer en translation dans le sens d'arc-boutement, et s'incliner vers les roues, pour suivre la rotation de la roue, de façon à éviter une sollicitation en torsion de l'ensemble poutre excessive.

Dans le cas où l'ensemble poutre est formé par une poutre, la configuration facultative avantageuse suivante peut être prévue :
- la poutre est creuse et au moins deux ouvertures sont pratiquées dans la face inférieure de la poutre,
- le support comprend, pour chaque ouverture précitée, un plot s'étendant à l'intérieur de la poutre en passant par l'ouverture correspondante, et
- les moyens de liaison de l'ensemble poutre au support sont formés, pour chaque plot, par deux parties tétons à une même hauteur et une paire de deux lumières pratiquées chacune dans une face latérale respective de la poutre, chaque partie téton s'étendant, en utilisation, à travers une partie dite active d'une lumière respective pour le support et le guidage en translation de la poutre, la partie active de la ou de chacune des lumières de la face latérale se trouvant sur le côté duquel s'étend la partie d'arrêt s'inclinant vers le bas dans le sens opposé au sens d'arc-boutement, tandis que la partie active de la ou de chacune des lumières de l'autre face latérale s'incline vers le haut dans ledit sens opposé au sens d'arc-boutement.

Les parties tétons peuvent être formées par des tétons portés par les plots ou, par exemple, être formés par les deux parties en saillie d'un axe passant à travers un plot.

Le déplacement en translation de l'ensemble poutre permettant de débloquer la cale après que la partie de pose s'est arc-boutée sur l'ensemble poutre pourrait en théorie être manuel, un opérateur venant déplacer l'ensemble poutre après avoir placé lesdits moyens de limitation dans une position inactive, par exemple après avoir enlevé une goupille dans le cas où lesdits moyens de limitation sont formés par une goupille passant à travers des trous traversants prévus dans le support et l'ensemble poutre.

De préférence, le dispositif de cale d'immobilisation comprend en outre des moyens de commande du déplacement en translation de l'ensemble poutre pour le déblocage de la cale, lesquels moyens de commande comprennent avantageusement un vérin double effet dont le corps est solidaire de l'un parmi le support et l'ensemble poutre et dont la tête est solidaire de l'autre du support et de l'ensemble poutre, le vérin étant orienté pour que la direction du mouvement de sa tige soit parallèle à la direction longitudinale de l'ensemble poutre.

Ce vérin double effet peut faire partie desdits moyens de limitation et être en outre associé à un ressort, comme décrit ci-dessus.

Les moyens de commande ne sont pas limités à l'utilisation d'un vérin tel que décrit ci-dessus et pourraient, par exemple, être formé par un levier actionnable par un opérateur et solidaire d'une came en appui contre la région d'extrémité avant de l'ensemble poutre, et par des moyens de sollicitation élastique de l'ensemble poutre en translation dans le sens opposé au sens d'arc-boutement, le profil de la came étant tel que dans une première position du levier, la came maintient l'ensemble poutre dans une position dans laquelle les moyens de sollicitation élastique sont comprimés et que, dans une seconde position du levier, la came autorise la translation de l'ensemble poutre sous l'action des moyens de sollicitation élastique.

La présente invention n'est pas limitée à un support particulier. Cependant, le support sera, de préférence, formé par un guide-roues.

Pour mieux illustrer l'objet de la présente invention, on va en décrire ci-après, à titre indicatif et non limitatif, plusieurs modes de réalisation particuliers avec référence aux dessins annexés.

Sur ces dessins :
- la Figure 1 est une vue en perspective d'un premier mode de réalisation du dispositif de cale d'immobilisation selon la présente invention ;
- la Figure 2 est une vue en perspective éclatée de la cale selon ledit premier mode de réalisation, vue de dessus ;
- les Figures 3 et 4 sont des vues en perspective de la cale selon ledit premier mode de réalisation, vue respectivement de dessous et de dessus, à l'état assemblé ;
- les Figures 5 et 6 sont des vues de côté du dispositif de la Figure 1, en position respectivement partie de pose arc-boutée sur la poutre et cale retirée après déblocage de la partie pose ;
- la Figure 7 est une vue de dessus d'une partie de l'ensemble poutre, d'une roue et de la cale dans la position d'arc-boutement de la Figure 6 ;
- la Figure 8 est une vue de détail de la Figure 7, montrant plus précisément la cale ;
- la Figure 9 est une vue en perspective d'un second mode de réalisation du dispositif de cale d'immobilisation selon la présente invention ;
- la Figure 10 est une vue en perspective de la cale selon ledit second mode de réalisation ; et
- les Figures 11, 12 et 13 sont des vues dudit second mode de réalisation analogues aux Figures 5, 6 et 8, respectivement.

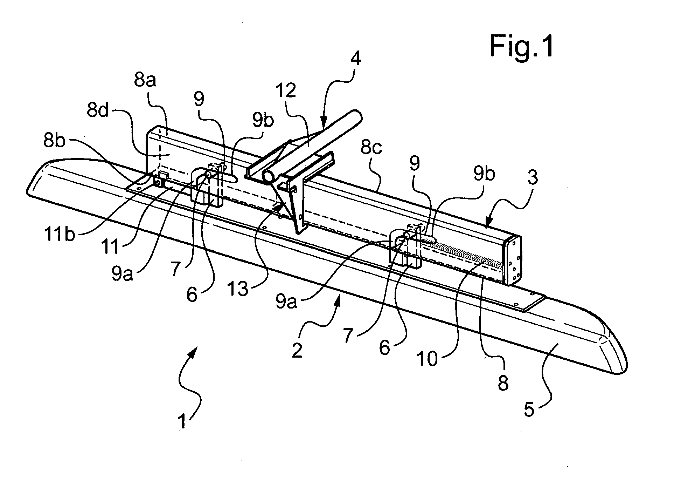

Si l'on se réfère à la Figure 1, on peut voir qu'un dispositif de cale d'immobilisation 1 selon le premier mode de réalisation de la présente invention comprend un support 2, un ensemble poutre 3 relié au support 2 et une cale 4 disposée sur l'ensemble poutre 3.

Le support 2 comprend un guide-roues 5 classique, qui sera fixé au sol perpendiculairement à un quai de chargement et qui sert à guider les roues d'un camion lorsque celui-ci recule vers le quai de chargement.

Deux plots verticaux 6, de section transversale rectangulaire, s'étendent à partir de la face supérieure du guide-roues 5. Un téton 7 est prévu sur chaque grande face de chaque plot 6, dans la région d'extrémité supérieure du plot 6, et les tétons 7 s'étendent horizontalement et perpendiculairement à la direction longitudinale du guide-roues 5.

L'ensemble poutre 3 consiste en une poutre creuse 8 de section transversale rectangulaire ayant des faces supérieure 8a et inférieure 8b opposées et deux faces latérales 8c et 8d, la face latérale 8c étant côté camion.

La poutre 8 comprend une région d'extrémité avant et une région d'extrémité arrière. Dans un souci de concision, les expressions « avant de la poutre 8 » et « arrière de la poutre 8 » seront utilisées pour la région d'extrémité respectivement avant et arrière. Dans l'exemple représenté, l'arrière de la poutre 8 est côté quai.

Sur chaque face latérale 8c, 8d sont pratiquées deux lumières 9 comprenant, dans le prolongement l'une de l'autre, une première partie 9a sensiblement verticale débouchant dans la face inférieure 8b et une seconde partie 9b, dite active, s'étendant en direction de l'arrière de la poutre 8 sur une longueur de 10 à 15 cm. A chaque, plot 6 correspond une paire de deux lumières 9 chacune sur une face latérale respective 8c, 8d.

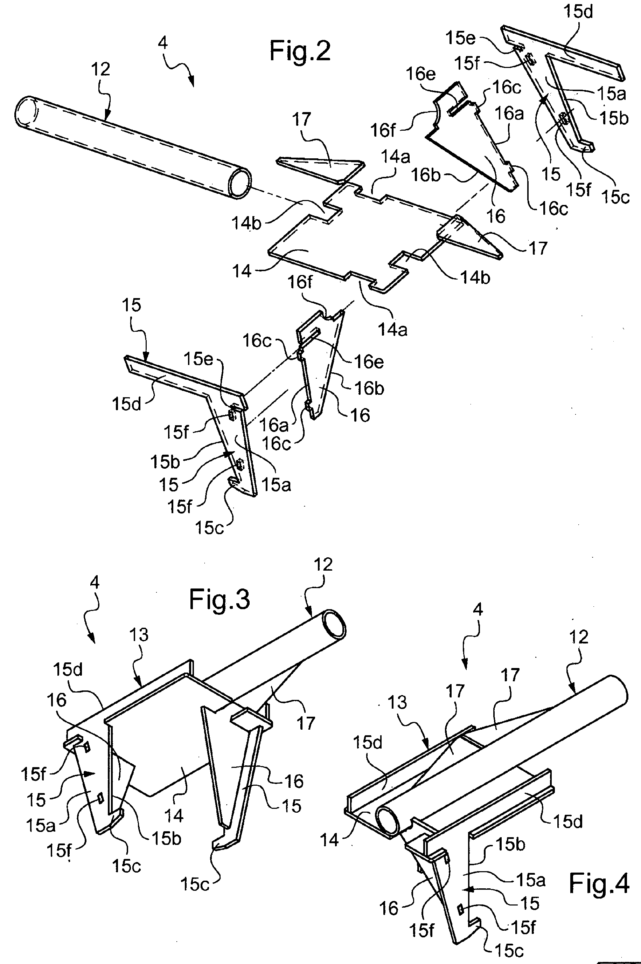

Comme on pourra mieux le voir sur les Figures 3 et 4, pour une même paire de lumières 9, les premières parties 9a sont alignées l'une avec l'autre, la partie active 9b de la lumière 9 sur la face latérale 8c et sur la face latérale 8d s'incline respectivement vers le bas et vers le haut.

En utilisation, les tétons 7 de chaque plot 6 s'étendent à travers la partie active 9b de la lumière 9 respective, les premières parties 9a permettant l'entrée et le passage des tétons 7 dans les lumières 9 lors du montage de la poutre 8 sur les plots 6, montage également permis par la présence d'ouvertures (non représentées) dans la face inférieure de la poutre 8 pour le passage des plots 6.

La poutre 8 est ainsi montée sur le support 2 d'une manière lui permettant d'être déplacée en translation, dans les deux sens, dans la direction longitudinale de la poutre 8, qui est ici parallèle à la direction longitudinale du guide-roues 5.

Le déplacement en translation de la poutre 8 dans le sens d'arc-boutement, à savoir le sens orienté de l'arrière vers l'avant de la poutre 8, est limité par des moyens de limitation formés par un ressort de compression 10 placé à l'intérieur de la poutre 8 et dont une première extrémité est solidaire du plot 9 côté arrière de la poutre 8 et dont l'autre, seconde, extrémité est solidaire de la face d'extrémité arrière de la poutre 8. Le ressort 10 est précontraint, de telle sorte qu'il ne peut être comprimé davantage que si on lui applique une force supérieure à sa valeur de précontrainte.

Est également prévu un vérin hydraulique double effet 11 dont le corps 11a est solidaire du support 2, ici du plot 6 côté avant de la poutre 8, et dont la tête 11b est solidaire de l'avant de la poutre 8. Le vérin 11 est disposé pour que sa tige soit parallèle à la direction de liberté en translation de la poutre 8 par rapport au support 2. On comprend à l'évidence qu'un mouvement d'extension ou de rétraction de la tige du vérin 11 permet d'obtenir une translation de la poutre 8 respectivement dans le sens d'arc-boutement et dans le sens opposé.

Par exemple, le ressort 10 ou le vérin 11 peut être précontraint de 2000 à 4000 DaN.

On va maintenant décrire plus précisément la structure de la cale 4 avec référence aux Figures 2 à 4.

La cale 4 comprend une partie d'arrêt 12 et une partie de pose 13.

Dans le mode de réalisation représenté, la partie d'arrêt 12 consiste en une barre cylindrique réalisée en titane ou alliage de titane.

La partie de pose 13 comprend une platine 14, se présentant sous la forme d'une plaque rectangulaire plate, deux ailes 15 et deux demi-cavaliers de renfort 16 et deux goussets 17, ces pièces étant encastrées les unes dans les autres puis soudées.

Ainsi, deux premières découpes rectangulaires 14a, servant à l'encastrement des ailes 15, sont pratiquées chacune dans un bord respectif des deux bords longitudinaux de la platine 14, une première découpe 14a se trouvant dans la région d'un premier angle de la platine 14 tandis que l'autre première découpe 14a se trouve dans la région de l'angle à la diagonale dudit premier angle. Deux secondes découpes rectangulaires 14b, servant à l'encastrement des demi-cavaliers 16, sont pratiquées chacune dans un bord respectif des deux bords transversaux de la platine 14, chaque seconde découpe 14b se situant dans la région de l'angle de la platine où se trouve la première découpe 14a correspondante.

Les ailes 15 se présentent chacune sous la forme d'une plaque plate ayant une partie centrale 15a présentant d'un côté un bord vertical 15b, dit de contact, et de l'autre côté un bord incliné, une partie inférieure formant un retour 15c perpendiculaire au bord de contact 15b et à l'opposé dudit bord inclinée, et une partie supérieure 15d en forme de bande allongée. Une échancrure 15e est pratiquée au sommet du bord incliné, au-dessous de la partie supérieure 15d dont une portion s'étend au-delà du bord incliné, et deux ouvertures rectangulaires 15f sont pratiquées dans la partie centrale 15a.

Les demi-cavaliers 16 se présentent chacun sous la forme d'une plaque de forme globalement triangulaire, ayant un bord vertical 16a et un bord incliné 16b opposés l'un à l'autre. Le bord vertical 16a porte deux pattes 16c et une échancrure rectangulaire 16d, dans la région supérieure dudit bord 16a. En partie supérieure du demi-cavalier 16 le bord vertical 16a est relié au bord incliné 16b par un bord supérieur présentant une partie 16f suivant un arc de cercle de rayon globalement égal au rayon de la surface cylindrique extérieure de la barre 12.

Dans l'état assemblé de la partie de pose 13, chaque aile 15 est placée dans une découpe 14a correspondante, une partie de la platine 14 venant se loger dans l'échancrure 15e et la partie supérieure 15d s'étendant sur la face supérieure de la platine 14 et sur toute la longueur cette dernière, et chaque demi-cavalier 16 est encastré à la fois dans l'aile 15 correspondante, par encastrement des pattes 16c dans les ouvertures 15f correspondantes, et dans la platine 14, par encastrement de la partie supérieure du demi-cavalier 16 dans la découpe 14b correspondante, et les différentes pièces sont soudées. Ensuite, la barre 12 est placée sur la platine 14, en prenant appui sur la partie en arc de cercle 16f de chaque demi-cavalier 16, puis soudée sur la partie de pose 13 avec une partie de la barre 12 se projetant à partir de la partie de pose 13. Enfin, les goussets 17, chacun en forme de triangle rectangle, sont positionnés de telle sorte que leur bord long est soudé à la barre 12 et que leur petit bord est soudé à la partie supérieure d'un demi-cavalier 16, avec un gousset 17 de chaque côté dudit demi-cavalier 16.

Dans l'état assemblé, les parties centrales 15a des ailes 15 sont parallèles l'une à l'autre, les bords verticaux 15b sont perpendiculaires à la platine 14, les retours 15c sont dirigés l'un vers l'autre, et les bords verticaux 15b sont écartés l'un de l'autre sur une distance, considérée suivant la direction longitudinale de la barre 12, au moins légèrement supérieure à la largeur de la poutre 8.

Ainsi, comme on peut le voir sur la Figure 1, la partie de pose 13 peut être disposée sur la poutre 8, tout d'abord en inclinant d'un côté la cale 4 pour venir placer une aile 15 en regard d'une face latérale 8c, 8d avec son retour 15c sous la face inférieure 8b, puis en l'inclinant de l'autre côté pour placer l'autre aile 15 dans la même position.

Lorsque la cale 4 est disposée sur la poutre 8 sans qu'aucune force ne soit appliquée sur la barre 12, les bords 15b des ailes 15 sont verticaux et perpendiculaires aux et à proximité des faces latérales 8c, 8d, et la barre 12 s'étend à partir de la poutre 8 perpendiculairement à la direction longitudinale de la poutre 8.

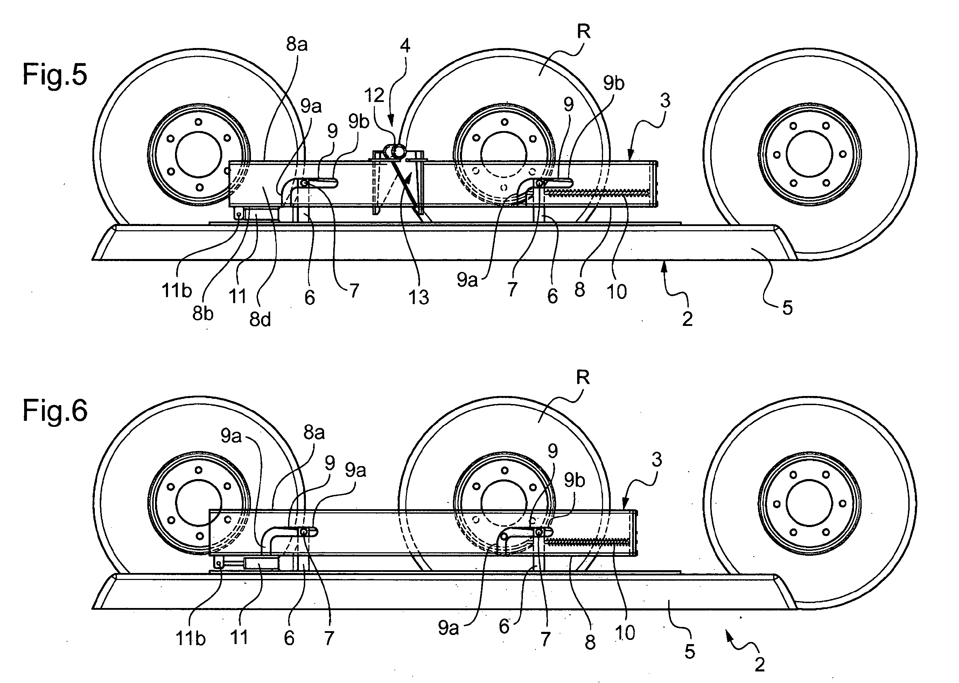

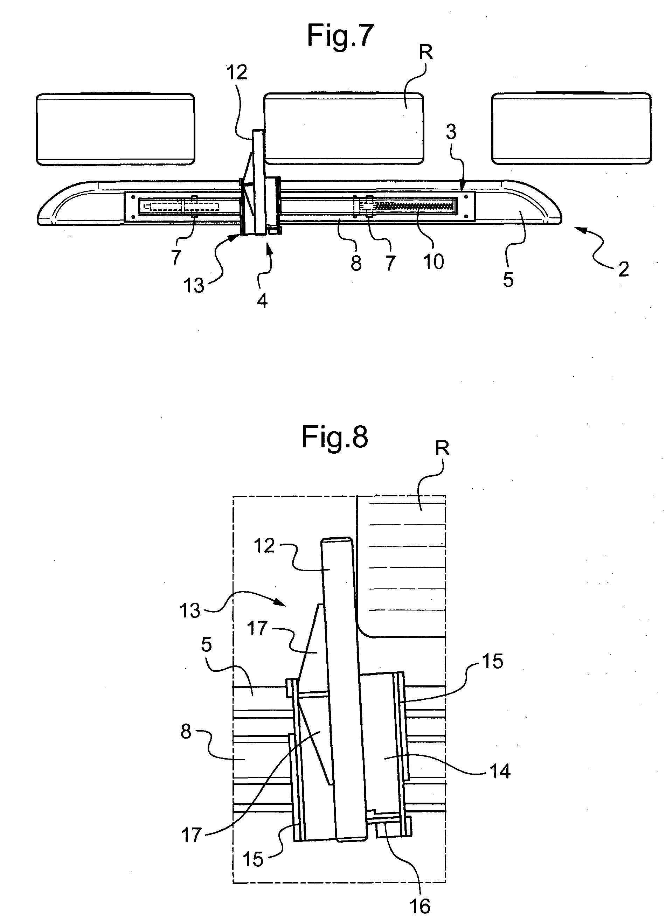

On va décrire maintenant le fonctionnement du dispositif 1 selon le mode de réalisation avec référence aux Figures 5 à 8, un camion, dont seules les roues sont représentées, étant venu se placer le long du guide-roues 5 en vue d'une opération de chargement ou de déchargement.

Une fois le camion en stationnement, un opérateur dispose la cale 4 devant l'une des roues, la roue R du centre dans l'exemple représenté, de la manière décrite ci-dessus, et déplace la cale 4 le long de la poutre 8 pour mettre en contact la barre 12 et la bande de roulement de la roue R.

On souligne ici qu'il est particulièrement avantageux que le support 2, l'ensemble poutre 3 et la cale 4 soient agencés et dimensionnés pour que la barre 12 se situe à la même hauteur que l'essieu du camion qu'il s'agit de caler.

Si le camion cherche à se déplacer à l'encontre de la barre 12, du fait d'un mauvais actionnement du frein à main ou par suite de l'opération de chargement du camion, la roue R appliquera une force parallèle à la direction longitudinale de la poutre 8 et orientée en direction de l'avant de la poutre 8, ce qui aura pour effet d'amener la partie de pose 13 à se déplacer dans le sens allant vers l'avant de la poutre 8, à savoir le sens d'arc-boutement, et à s'arc-bouter sur la poutre 8 par contact des bords verticaux 15b des ailes 15 contre les faces latérales 8c, 8d de la poutre 8, comme représenté sur les Figures 5, 7 et 8.

On souligne ici que les bords des ailes 15 qui viendront en contact avec la poutre 8 peuvent être avantageusement revêtus de carbure de tungstène, afin d'augmenter leur coefficient de frottement entre la partie de pose 13 et la poutre 8.

La cale 4 sera donc automatiquement bloquée en position sur la poutre 3, elle-même maintenue immobile par l'action conjuguée du ressort 10 et du vérin 11.

Dans le cas où la roue R exerce sur la barre 12 une force d'une grandeur supérieure à la valeur de la précontrainte du ressort 10, la poutre 8 pourra se déplacer légèrement en translation dans le sens d'arc-boutement, laquelle translation sera accompagnée simultanément d'une rotation de la poutre 8 autour de son axe central longitudinal, du fait des inclinaisons des lumières 9, vers le côté camion, à savoir dans le sens contraire des aiguilles d'une montre si l'on observe la poutre 8 en bout côté arrière de la poutre 8. Autoriser un tel déplacement en translation et une telle inclinaison permet d'éviter la rupture mécanique de la poutre 8 dans le cas d'une force excessive sur la barre 12.

A la fin de l'opération de chargement/déchargement, l'opérateur peut actionner le vérin 11, par tout moyen approprié connu, tel qu'une pédale, une télécommande, etc., pour faire sortir la tige et ainsi déplacer la poutre 8 en translation dans le sens d'arc-boutement, ce qui permet de réduire la pression exercée par la roue R sur la barre 12 et ainsi de pouvoir facilement retirer la barre 12 pour laisser partir le camion du quai de chargement, comme illustré par la Figure 6. Le ressort 10 permet de garantir le retour à sa position initiale de la poutre 8, avec de préférence un amortissement assuré par le vérin 11.

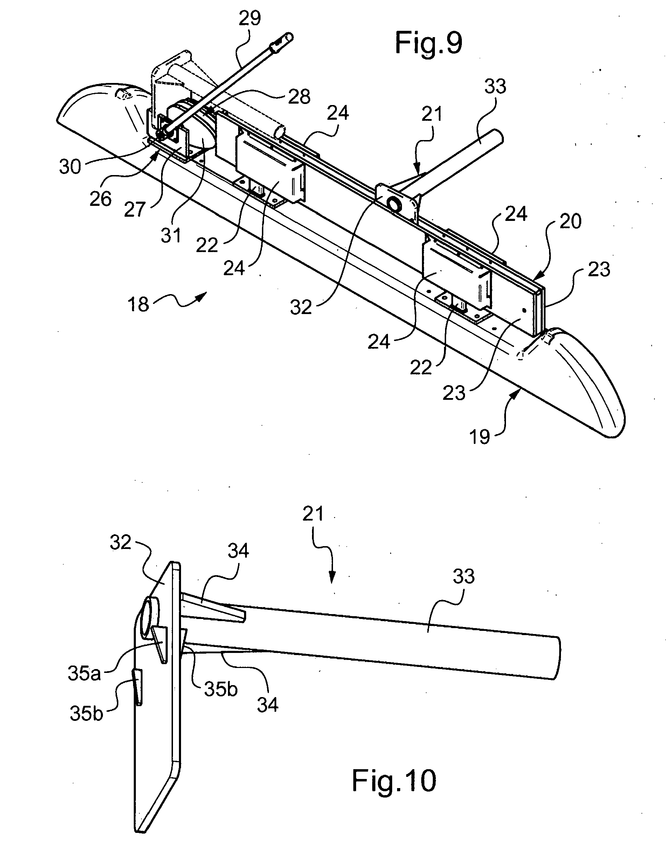

Si l'on se réfère maintenant à la Figure 9, on peut voir qu'un dispositif de cale d'immobilisation 18 selon le second mode de réalisation de la présente invention comprend un support 19, un ensemble poutre 20 relié au support 19 et une cale 21 disposée sur l'ensemble poutre 20.

Le second mode de réalisation repose sur le même principe de fonctionnement que le premier mode de réalisation, mais diffère de ce dernier par la structure du support 19, de l'ensemble poutre 20 et de la cale 21.

Le support 19 comprend le guide-roues 5 et deux paires de plots verticaux 22, chaque plot 22 portant un téton sur un côté de celui-ci.

L'ensemble poutre 20 consiste en deux profilés plats 23 parallèles et formant entre eux un espace de réception d'une partie de la cale 21. Chaque plot 22 est reçu en partie à l'intérieur d'un logement respectif 24 porté sur l'extérieur de chaque profilé 23.

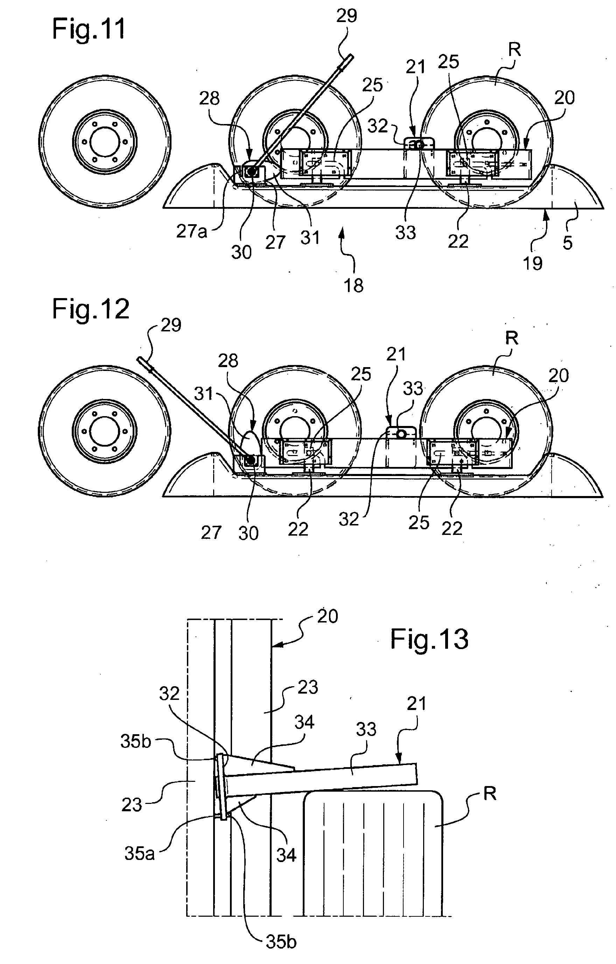

Si l'on se réfère également aux Figures 11 et 12, on peut voir que, pour chaque plot 22, est ménagée dans le profilé 23 respectif une lumière 25 analogue à la lumière 9 du premier mode de réalisation, à la différence que la partie active de la lumière 25 est horizontale. Le téton du plot 22 respectif s'étend à l'intérieur de la lumière 25 respective. L'ensemble poutre 20 peut ainsi être déplacé en translation par rapport au support 19.

Un ressort (non représenté) sollicite en translation l'ensemble poutre 20 dans le sens d'arc-boutement, une extrémité du ressort étant solidaire de l'ensemble poutre 20 et l'autre extrémité étant solidaire du support 2. A l'évidence, d'autres moyens pour déplacer l'ensemble poutre 20 dans le sens d'arc-boutement peuvent être utilisés.

Le dispositif 18 comprend également des moyens de commande 26 aptes à empêcher tout déplacement de l'ensemble poutre 20 dans le sens d'arc-boutement, afin de permettre le blocage de la cale 21 par arc-boutement sur l'ensemble poutre 20, et à déplacer l'ensemble poutre 20 dans le sens opposé.

Les moyens de commande 26 comprennent un socle en U 27, des moyens formant came 28 et un levier d'actionnement 29. Le socle en U 27, formé d'une seule pièce ou mécanosoudé, est fixé par son fond au guide-roues 5 et une échancrure verticale 27a est pratiquée dans le bord supérieur de chaque aile du socle 27. Lesdites ailes portent à rotation un axe 30 s'étendant transversalement à la direction longitudinale de l'ensemble poutre 20 et dont au moins une extrémité fait saillie sur l'extérieur du socle 27, extrémité à laquelle le levier 29 est rendue solidaire, le pivotement du levier 29 entraînant ainsi une rotation de l'axe 30.

Les moyens formant came 28 comprennent deux cames 31 consistant en une plaque plate dont le contour suit la forme d'une section verticale d'un oeuf, à savoir que la largeur de la came 31 diminue progressivement jusqu'à son sommet. Les cames 31 sont solidaires de l'axe 30 et placées, entre les deux ailes du socle 27, de telle sorte que chaque came 31 est alignée avec un profilé 23 respectif et que le bord extérieur de chaque came 31 est en contact avec le bord vertical côté came 31 dudit profilé 23.

On va maintenant décrire plus précisément la structure de la cale 21 avec référence à la Figure 10. La cale 21 comprend une plaque 32 et une barre 33, constituant respectivement la partie de pose et la partie d'arrêt de la cale 21.

La barre 33, cylindrique, est réalisée en titane ou alliage de titane et s'étend à partir de la région supérieure d'une première face de la plaque 32. Deux goussets de renfort 34a, 34b, de forme triangulaire, sont soudés à la plaque 32 et à la barre 33 afin d'augmenter la résistance de la cale 21, l'un des goussets 34a étant plus petit que l'autre 34b.

Enfin, deux pièces en coin 35a, 35b sont prévues de chaque côté de la plaque 32, en partie supérieure de celle-ci, et elles ont chacune un bord extérieur incliné, l'inclinaison des pièces en coin 35a étant plus forte que celles des pièces en coin 35b. Les pièces en coin 35a, 35b sont disposés de telle sorte qu'à une pièce en coin 35a d'un côté de la plaque 32 correspond une pièce en coin 35b de l'autre côté. La fonction des pièces en coin 35a, 35b sera explicitée ci-après.

On va décrire maintenant le fonctionnement du dispositif 18 avec référence aux Figures 11 à 13, un camion, dont seules les roues sont représentées, étant venu se placer le long du guide-roues 5 en vue d'une opération de chargement ou de déchargement.

Les moyens de commande 26 6 sont agencés pour que, dans la position de non-utilisation, et également la position de calage du camion représentée sur la Figure 11, le levier 29 soit en butée vers la droite, si l'on se réfère à cette même Figure 11, position dans laquelle les cames 31 ont été amenés à tourner vers la droite et empêchent la translation des profilés 23 dans le sens d'arc-boutement, le ressort ayant été comprimé. On souligne ici que sont prévus des moyens de blocage en position/déblocage du levier 29.

Une fois le camion en stationnement, un opérateur dispose la cale 21 devant l'une des roues, la roue R de droite dans l'exemple représenté, en plaçant la plaque 32 dans l'espace formé entre les deux profilés 23, avec la barre 33 devant la roue R et les pièces en coin 35a, 35b au contact des bords supérieurs des profilés 23.

Si la roue R applique sur la barre 33 une force parallèle à la direction longitudinale de l'ensemble poutre 20 et orientée en direction de l'avant de la poutre 20, cela amènera la plaque 32 à tourner légèrement autour d'un axe vertical passant par le centre de la plaque 32. Comme on peut le voir sur la Figure 13, chaque bord vertical de la plaque 32 sera en contact avec la face intérieure du profilé 23 respectif, bloquant la plaque 32 par arc-boutement à l'intérieur de l'ensemble poutre 20.

La cale 21 sera donc automatiquement bloquée en position sur l'ensemble poutre 3, elle-même maintenue immobile par les moyens de commande 26.

Les pièces en coin 35a, 35b permettent, après que l'opérateur a posé la cale 4 sur l'ensemble poutre 20, de pré-orienter la plaque 32 en l'inclinant légèrement dans le sens dans lequel elle sera amenée à tourner lorsque la roue R viendra buter contre la barre 33, ce qui favorise l'arc-boutement de la plaque 32.

A la fin de l'opération de chargement/déchargement, l'opérateur actionne le levier 29 en le faisant pivoter vers la gauche, ce qui fait pivoter les cames 31 également vers la gauche. Du fait du contour des cames 31, cette rotation permet à l'ensemble poutre 20 d'être déplacé en translation dans le sens d'arc-boutement par le ressort, éliminant la pression exercée par la roue R sur la barre 33 et permettant ainsi de retirer facilement la barre 33 pour laisser partir le camion du quai de chargement.

On peut souligner ici que les deux échancrures 27a sont alignées et que l'opérateur peut alors ranger la cale 21 en insérant la plaque 32 dans les échancrures 27a, comme représenté en pointillés sur la Figure 9.

On constate donc que le dispositif de cale d'immobilisation selon la présente invention est simple, facile à installer et peu coûteux, et permet de retirer la cale même lorsque la position de la roue calée a changé, par exemple en raison de la différence de chargement du camion entre son arrivée au quai et son départ de celui-ci.

Il est bien entendu que le mode de réalisation ci-dessus, de la présente invention a été donné à titre indicatif et non limitatif et que des modifications pourront y être apportées sans que l'on s'écarte pour autant du cadre de la présente invention.

## Revendications

1. Dispositif (1 ; 18) de cale d'immobilisation d'un véhicule dans un emplacement de chargement/déchargement, comprenant un support (2 ; 19) destiné à être fixé au sol, au voisinage de l'emplacement de chargement/déchargement, un ensemble poutre (3 ; 20) relié au support (2 ; 19) et ayant une région d'extrémité avant et une région d'extrémité arrière opposées l'une à l'autre dans la direction longitudinale de l'ensemble poutre (3 ; 20), et une cale (4 ; 21) ayant une partie (12 ; 33) allongée, dite d'arrêt, solidaire d'une partie (13 ; 32) de pose sur l'ensemble poutre (3 ; 20) de telle sorte que lorsque la partie de pose (13 ; 32) est disposée sur l'ensemble poutre (3 ; 20), la partie d'arrêt (12 ; 33) est placée dans une position dans laquelle elle s'étend à partir de l'ensemble poutre (3 ; 20) et dans l'emplacement de chargement/déchargement pour former un arrêt contre lequel vient buter une roue (R) d'un véhicule qui a été placé dans l'emplacement de chargement/déchargement, et des moyens de blocage de la position de la cale (4 ; 21) sur l'ensemble poutre (3 ; 20) de façon à ainsi empêcher le véhicule de se déplacer à l'encontre de la partie d'arrêt (12 ; 33), l'ensemble poutre (3 ; 20) étant déplaçable en translation par rapport au support (2 ; 19) dans la direction longitudinale de l'ensemble poutre (3 ; 20), le dispositif de cale d'immobilisation (1 ; 18) étant **caractérisé par le fait que** la partie de pose (13 ; 32) porte des moyens de blocage par arc-boutement sur l'ensemble poutre (3 ; 20), constituant les moyens de blocage de la position de la cale (4 ; 21) sur l'ensemble poutre (3 ; 20), pour maintenir la cale (4 ; 21) immobile par rapport à l'ensemble poutre (3 ; 20) lorsqu'une force parallèle à la direction longitudinale de l'ensemble poutre (3 ; 20) et orientée dans le sens d'arc-boutement est exercée sur la partie d'arrêt (12 ; 33), bloquant ainsi en position le dispositif de cale d'immobilisation (1 ; 18), étant prévus des moyens (10, 11 ; 26) de limitation du déplacement de l'ensemble poutre (3 ; 20) lors de l'application de ladite force, le déblocage de la cale (4 ; 21) étant obtenu par translation de l'ensemble poutre (3 ; 20) suivant la direction longitudinale de l'ensemble poutre (3 ; 20) et dans le sens d'arc-boutement.

2. Dispositif de cale d'immobilisation (1) selon la revendication 1, **caractérisé par le fait que** l'ensemble poutre (3) est formé par une poutre (8) de section transversale parallélépipédique, ayant une face supérieure (8a) tournée à l'opposé du sol après que le support (2) est fixé au sol, une face inférieure (8b) opposée à la face supérieure (8a), et deux faces latérales (8c, 8d) opposées reliant les faces supérieure (8a) et inférieure (8b), et **par le fait que** la partie de pose (13) est formée par une console comprenant une platine (14), située sur la face supérieure de la poutre (8), et deux ailes (15) s'étendant à partir de la platine (14), chaque aile (15) étant en regard d'une face respective parmi les deux faces latérales (8c, 8d) de la poutre (8) et présentant un bord (15a), dit de contact, perpendiculaire à la platine (14), les bords de contact (15a) étant décalés l'un de l'autre dans la direction longitudinale de la poutre (8) pour permettre l'arc-boutement de la partie de pose (13) sur la poutre (8) par contact de chacun des bords de contact (15a) avec la face latérale respective (8c, 8d) de la poutre (8).

3. Dispositif de cale d'immobilisation (1) selon la revendication 2, **caractérisé par le fait qu'**il comprend des moyens formant butée contre la poutre (8) pour empêcher que la partie de pose (13) ne soit séparée de la poutre (8) par soulèvement, les moyens formant butée étant, de préférence, formés par les régions d'extrémité libre de chaque aile (15) qui s'achèvent chacune en un retour (15b) perpendiculaire au bord de contact (15a) de ladite aile (15), le retour (15b) étant dirigé vers l'autre aile (15) et se situant sous la face inférieure (8b) de la poutre (8).

4. Dispositif de cale d'immobilisation (18) selon la revendication 1, **caractérisé par le fait que** l'ensemble poutre (20) est formé par deux profilés plats parallèles (23), en regard et espacés l'un de l'autre, et la partie de pose (32) de la cale (21) se présente sous la forme d'une plaque (32) à partir d'une face de laquelle s'étend la partie d'arrêt (33), de préférence perpendiculairement, la plaque (32) étant reçue verticalement dans l'espace formé entre les deux profilés plats (23) pour permettre l'arc-boutement de la partie de pose (32) sur l'ensemble poutre (20) par contact de chacun des deux bords verticaux de la plaque (32) avec l'un respectif des profilés plats (23).

5. Dispositif de cale d'immobilisation (18) selon la revendication 4, **caractérisé par le fait que** la plaque (32) formant la partie de pose (32) est munie de moyens (35a, 35b) pour orienter la plaque (32) dans une position favorisant un blocage de la cale (21) par arc-boutement, position dans laquelle la plaque (32) est verticale, le bord vertical de la plaque (32) qui est situé côté région d'extrémité arrière de l'ensemble poutre (20) est en contact avec le profilé plat (23) qui se trouve sur le côté duquel s'étend la partie d'arrêt (33) de la cale (21), et le bord vertical de la plaque (32) qui est situé côté région d'extrémité avant de l'ensemble poutre (20) est en contact avec l'autre profilé plat (23).

6. Dispositif de cale d'immobilisation (1 ; 18) selon l'une des revendications 1 à 5, **caractérisé par le fait que** la partie d'arrêt (12 ; 33) se présente sous la forme d'une barre, de préférence en titane ou alliage de titane.

7. Dispositif de cale d'immobilisation (1 ; 18) selon l'une des revendications 1 à 5, **caractérisé par le fait que** la partie d'arrêt se présente sous la forme d'une pale présentant une face incurvée conformée pour épouser la bande de roulement de la roue (R) d'un véhicule bloqué par le dispositif de cale d'immobilisation (1 ; 18), la pale et la partie de pose (13 ; 32) étant, de préférence, respectivement en matériau composite et en titane ou alliage de titane.

8. Dispositif de cale d'immobilisation (1) selon l'une des revendications 1 à 7, **caractérisé par le fait que** les moyens de limitation (10, 11) sont agencés pour autoriser, lorsqu'une force exercée sur la partie d'arrêt (12) dépasse une valeur de seuil donnée, un déplacement de l'ensemble poutre (3) en translation dans le sens d'arc-boutement, tout en permettant l'arc-boutement de la partie de pose (13) sur l'ensemble poutre (3).

9. Dispositif de cale d'immobilisation (1) selon la revendication 8, **caractérisé par le fait que** les moyens de limitation (10, 11) sont formés par un ressort (10) dont une extrémité est solidaire du support (2) et dont l'autre extrémité est solidaire de l'ensemble poutre (3), le ressort (10) étant agencé pour solliciter l'ensemble poutre (3) dans le sens opposé au sens d'arc-boutement et précontraint à ladite valeur de seuil, et/ou formés par un vérin (11) dont le corps (11a) est solidaire de l'un parmi le support (2) et l'ensemble poutre (3) et dont la tête (11b) est solidaire de l'autre du support (2) et de l'ensemble poutre (3), le vérin (11) étant piloté pour s'opposer au déplacement de l'ensemble poutre (3) en translation dans le sens d'arc-boutement lorsque la force exercée sur la partie d'arrêt (12) est inférieure à la valeur de seuil et pour autoriser le déplacement de l'ensemble poutre (3) dans le sens d'arc-boutement lorsque ladite force est supérieure à la valeur de seuil.

10. Dispositif de cale d'immobilisation (1) selon l'une des revendications 8 et 9, **caractérisé par le fait que** l'ensemble poutre (3) est relié au support (2) par des moyens de liaison agencés de telle sorte qu'une translation de l'ensemble poutre (3) dans le sens d'arc-boutement entraîne une rotation simultanée de l'ensemble poutre (3), autour de son axe central longitudinal, vers le côté opposé à celui duquel s'étend la partie d'arrêt (12), tandis qu'une translation de l'ensemble poutre (3) dans le sens opposé au sens d'arc-boutement entraîne une rotation de l'ensemble poutre (3) vers le côté duquel s'étend la partie d'arrêt (12).

11. Dispositif de cale d'immobilisation (1) selon la revendication 10, prise en dépendance de l'une des revendications 2 et 3, **caractérisé par le fait que** :
- la poutre (8) est creuse et au moins deux ouvertures sont pratiquées dans la face inférieure (8b) de la poutre (8),
- le support (2) comprend, pour chaque ouverture précitée, un plot (6) s'étendant à l'intérieur de la poutre (8) en passant par l'ouverture correspondante, et
- les moyens de liaison de l'ensemble poutre (3) au support (2) sont formés, pour chaque plot (6), par deux parties tétons (7) à une même hauteur et une paire de deux lumières (9) pratiquées chacune dans une face latérale respective (8c, 8d) de la poutre, chaque partie téton (7) s'étendant, en utilisation, à travers une partie dite active (9b) d'une lumière respective (9) pour le support et le guidage en translation de la poutre (8), la partie active (9b) de la ou de chacune des lumières (9) de la face latérale (9c) se trouvant sur le côté duquel s'étend la partie d'arrêt (12) s'inclinant vers le bas dans le sens opposé au sens d'arc-boutement, tandis que la partie active (9b) de la ou de chacune des lumières (9) de l'autre face latérale (8d) s'incline vers le haut dans ledit sens opposé au sens d'arc-boutement.

12. Dispositif de cale d'immobilisation (1 ; 18) selon l'une des revendications 1 à 11, **caractérisé par le fait qu'**il comprend en outre des moyens de commande du déplacement en translation de l'ensemble poutre (3 ; 20) pour le déblocage de la cale (4 ; 21), lesquels moyens de commande comprennent avantageusement un vérin double effet (11) dont le corps (11a) est solidaire de l'un parmi le support (2) et l'ensemble poutre (3) et dont la tête (11b) est solidaire de l'autre du support (2) et de l'ensemble poutre (3), le vérin (11) étant orienté pour que la direction du mouvement de sa tige soit parallèle à la direction longitudinale de l'ensemble poutre (3).

13. Dispositif de cale d'immobilisation (1 ; 18) selon l'une des revendications 1 à 11, **caractérisé par le fait que** le support (2 ; 19) est formé par un guide-roues (5) .

## Patentansprüche

1. Keilvorrichtung (1 ; 18) als Wegfahrsperre für ein Fahrzeug an einem Be-/Entladestandort, mit einer Stütze (2 ; 19), die am Erdboden befestigt wird, in der Nähe des Be-/Entladestandorts, einem Träger-Bauteil (3 ; 20), das mit der Stütze (2 ; 19) verbunden ist und einen vorderen Endbereich und einen hinteren Endbereich aufweist, die einander in Längsrichtung des Träger-Bauteils (3 ; 20) gegenüberliegen, und einem Keil (4 ; 21) mit einem verlängerten Teil (12 ; 33), genannt Halteteil, das mit einem Teil (13 ; 32) zur Montage auf das Träger-Bauteil (3 ; 20) verbunden ist, so dass, wenn das Montageteil, (13 ; 32) auf dem Träger-Bauteil (3 ; 20) angeordnet ist, das Halteteil (12 ; 33) sich in einer Position befindet, in der es sich ausgehend von dem Träger-Bauteil (3 ; 20) erstreckt und in dem Be-/Entladestandort zur Bildung eines Haltes, gegen den ein Rad (R) eines Fahrzeugs anschlägt, das in dem Be-/Entladestandort platziert wurde, und Blockierungsmitteln für die Position des Keils (4 ; 21) auf dem Träger-Bauteil (3 ; 20), um so das Fahrzeug daran zu hindern, sich entgegen dem Halteteil (12 ; 33) zu bewegen, wobei das Träger-Bauteil (3 ; 20) im Verhältnis zur Stütze (2 ; 19) in Längsrichtung des Träger-Bauteils (3 ; 20) verschiebbar ist,
wobei die Keilvorrichtung als Wegfahrsperre (1 ; 18) **dadurch gekennzeichnet ist, dass** das Montageteil (13 ; 32) Blockierungsmittel durch Selbsthemmung auf dem Träger-Bauteil (3 ; 20) trägt, die die Blockierungsmittel für die Position des Keils (4 ; 21) auf dem Träger-Bauteil (3 ; 20) bilden, um den Keil (4 ; 21) unbeweglich im Vergleich zum Träger-Bauteil (3 ; 20) zu halten, wenn eine Kraft parallel zu der Längsrichtung des Träger-Bauteils (3 ; 20) in Richtung der Selbsthemmung auf das Halteteil (12 ; 33) ausgeübt wird, und blockiert so die Keilvorrichtung als Wegfahrsperre (1 ; 18), wobei Mittel (10, 11 ; 26) zur Begrenzung der Bewegung des Träger-Bauteils (3 ; 20) bei Anwendung besagter Kraft vorgesehen sind, wobei die Entblockung des Keils (4 ; 21) durch Verschiebung des Träger-Bauteils (3 ; 20) in Längsrichtung des Träger-Bauteils (3 ; 20) und in Richtung der Selbsthemmung erhalten wird.

2. Keilvorrichtung als Wegfahrsperre (1) nach Anspruch 1, **gekennzeichnet dadurch, dass** das Träger-Bauteil (3) von einem Träger (8) von quaderförmigem Querschnitt gebildet wird, mit einer vom Boden abgewandten Oberseite (8a), nachdem die Stütze (2) am Erdboden befestigt wurde, von einer der Oberseite (8a) entgegengesetzten Unterseite (8b) und zwei gegenüberliegenden Seitenflächen (8c, 8d) die die obere (8a) und untere (8b) Seite verbinden, sowie dadurch, dass das Montageteil (13) durch eine Konsole gebildet wird, die eine Platine (14) umfasst, auf der Oberseite des Trägers gelegen (8), und zwei Flügel (15), die sich ausgehend von der Platine erstrecken (14), wobei jeder Flügel (15) sich gegenüber einer jeweiligen Seite der beiden Seitenflächen (8c, 8d) des Trägers (8) befindet und einen Rand (15a) aufweist, Kontaktrand genannt, senkrecht zu der Platine (14), wobei die Kontaktränder (15a) voneinander in Längsrichtung des Trägers (8) versetzt sind, um die Selbsthemmung des Montageteils (13) auf dem Träger (8) durch Kontakt jedes der Kontaktränder (15a) mit der jeweiligen Seite (8c, 8d) des Trägers (8) zu gestatten.

3. Keilvorrichtung als Wegfahrsperre (1) nach Anspruch 2, **gekennzeichnet dadurch, dass** sie Mittel umfasst, die einen Endanschlag gegen den Träger (8) bilden, um zu verhindern, dass das Montageteil (13) durch Hochheben vom Träger (8) getrennt wird, wobei die Endanschlag bildenden Mittel vorzugsweise von den freien Endregionen jedes Flügels (15) gebildet werden, die jede in einem Rücklauf (15b) lotrecht zum Kontaktrand (15a) des Flügels (15) enden, wobei der Rücklauf (15b) zu dem anderen Flügel (15) gerichtet und unter der Unterseite (8b) des Trägers (8) gelegen ist.

4. Keilvorrichtung als Wegfahrsperre (18) nach Anspruch 1, **gekennzeichnet dadurch, dass** das Träger-Bauteil (20) von zwei parallelen flachen Profilstücken (23) gebildet wird, die einander gegenüberliegen und voneinander beabstandet sind, und das Montageteil (32) des Keils (21) ist in Form einer Platte (32) von einer Seite ausgehend, von der aus sich das Halteteil (33) erstreckt, vorzugsweise senkrecht, die Platte (32) wird senkrecht in dem Raum zwischen den beiden flachen Profilstücken (23) empfangen, um die Selbsthemmung des Montageteils (32) auf das dem-Bauteil (20) durch Kontakt jedes der beiden senkrechten Ränder der Platte (32) mit dem jeweiligen flachen Profilstück (23) zu gestatten.

5. Keilvorrichtung als Wegfahrsperre (18) nach Anspruch 4, **gekennzeichnet dadurch, dass** die Platte (32), die das Montageteil (32) bildet, mit Mitteln (35a, 35b) ausgestattet ist, um die Platte (32) in eine Position auszurichten, die eine Blockierung des Keils (21) durch Selbsthemmung begünstigt, in welcher Position die Platte (32) senkrecht ist, der senkrechte Rand der Platte (32) an der Seite des hinteren Endbereichs des Träger-Bauteils (20) ist in Kontakt mit dem Flachprofil (23), an dessen Seite sich das Halteteil (33) des Keils (21) erstreckt, und der senkrechte Rand der Platte (32) an der Seite des vorderen Endbereichs des Träger-Bauteils (20) ist in Kontakt mit dem anderen Flachprofil (23).

6. Keilvorrichtung als Wegfahrsperre (1 ; 18) nach einem der Ansprüche 1 bis 5, **gekennzeichnet dadurch, dass** das Halteteil (12 ; 33) die Form einer Stange hat, vorzugsweise aus Titan oder einer Titanlegierung.

7. Keilvorrichtung als Wegfahrsperre (1 ; 18) nach einem der Ansprüche 1 bis 5, **gekennzeichnet dadurch, dass** das Halteteil die Form einer Schaufel hat, die eine gebogene Seite aufweist, um sich an die Lauffläche des Reifens (R) eines durch die Keilvorrichtung als Wegfahrsperre (1 ; 18) blockierten Fahrzeugs anzupassen, wobei die Schaufel und das Montageteil (13 ; 32) vorzugsweise aus Verbundmaterial bzw. Titan oder Titanlegierung ist.

8. Keilvorrichtung als Wegfahrsperre (1) nach einem der Ansprüche 1 bis 7, **gekennzeichnet dadurch, dass** die Begrenzungsmittel (10,11) angeordnet sind, um, wenn eine auf das Halteteil (12) ausgeübte Kraft einen gegebenen Schwellenwert überschreitet, eine Bewegung des Träger-Bauteils (3) in Richtung Selbsthemmung zu gestatten, wobei auch die Selbsthemmung des Montageteils (13) auf dem Träger-Bauteil (3) möglich wird.

9. Keilvorrichtung als Wegfahrsperre (1) nach Anspruch 8, **gekennzeichnet dadurch, dass** die Begrenzungsmittel (10,11) durch eine Feder (10) gebildet werden, deren eines Ende mit der Stütze (2) verbunden ist und deren anderes Ende mit dem Träger-Bauteil (3) verbunden ist, wobei die Feder (10) angeordnet ist, um das Träger-Bauteil (3) in die Richtung entgegen der Selbsthemmung zu beanspruchen und auf besagten Schwellenwert vorgespannt ist, und/oder von einem Zylinder (11) gebildet werden, dessen Körper (11a) entweder mit der Stütze (2) oder dem Träger-Bauteil (3) verbunden ist und dessen Kopf (11b) mit dem anderen dieser beiden verbunden ist, wobei der Zylinder (11) betrieben wird, um der Bewegung des Träger-Bauteils (3) in Richtung Selbsthemmung entgegenzustehen, wenn die auf das Halteteil (12) ausgeübte Kraft niedriger ist als der Schwellenwert und um die Bewegung des Träger-Bauteils (3) in Richtung Selbsthemmung zu gestatten, wenn besagte Kraft höher als der Schwellenwert ist.

10. Fixierungskeilvorrichtung (1) nach einem der Ansprüche 8 und 9, **gekennzeichnet dadurch, dass** das Träger-Bauteil (3) mit der Stütze (2) durch Verbindungsmittel verbunden ist, die derart angeordnet sind, dass eine Verschiebung des Träger-Bauteils (3) in Richtung der Selbsthemmung zu einer gleichzeitigen Rotation des Träger-Bauteils (3) um seine zentrale Längsachse führt, zu der Seite hin, die der Seite gegenüberliegt, von der aus sich das Halteteil erstreckt (12), während eine Verschiebung des Träger-Bauteils (3) in der Richtung entgegen der Selbsthemmung zu einer Rotation des Träger-Bauteils (3) zu der Seite hin führt, von der aus sich das Halteteil (12) erstreckt.

11. Keilvorrichtung als Wegfahrsperre (1) nach Anspruch 10, in Abhängigkeit von einem der Patentansprüche 2 und 3, **gekennzeichnet dadurch, dass**:
- der Träger (8) hohl ist und mindestens zwei Öffnungen sich in der Unterseite (8b) des Trägers (8) befinden,
- die Stütze (2) für jede vorgenannte Öffnung einen Kontakt (6) umfasst, der sich in den Träger (8) hinein erstreckt, indem er durch die entsprechende Öffnung hindurchgeht, und
- dass die Verbindungsmittel des Träger-Bauteils (3) mit der Stütze (2) für jede Kontaktstelle (6) durch zwei Stiftteile (7) mit derselben Höhe und ein Paar von zwei Öffnungen (9) in je einer Seitenfläche (8c, 8d) des Trägers gebildet werden, wobei jedes Stiftteil (7) sich bei der Benutzung durch ein sogenanntes aktives (9b) Teil einer Öffnung (9) für den Träger und die verschiebbare Führung des Trägers (8) erstreckt, wobei das aktive Teil (9b) der oder jeder Öffnung (9) der Seitenfläche (9c) sich auf der Seite befindet, von der aus sich das Halteteil (12) erstreckt, und sich nach unten neigt, entgegen der Richtung der Selbsthemmung, während das aktive Teil (9b) der oder jeder Öffnung (9) der anderen Seitenfläche (8d) sich nach oben entgegen der Richtung der Selbsthemmung neigt.

12. Keilvorrichtung als Wegfahrsperre (1 ; 18) nach einem der Ansprüche 1 bis 11, **gekennzeichnet dadurch, dass** sie außerdem Steuermittel für die verschiebbare Bewegung des Träger-Bauteils (3 ; 20) zur Entblockung des Keils (4 ; 21) umfasst, wobei die Steuermittel vorteilhafterweise einen doppelt wirkenden Zylinder (11) umfassen, dessen Körper (11a) entweder mit der Stütze (2) oder dem Träger-Bauteil (3) verbunden ist und dessen Kopf (11b) mit dem anderen dieser beiden verbunden ist, wobei der Zylinder (11) so ausgerichtet ist, dass die Richtung der Bewegung seines Schafts parallel zur Längsrichtung des Träger-Bauteils (3) ist.

13. Keilvorrichtung als Wegfahrsperre (1 ; 18) nach einem der Ansprüche 1 bis 11, **gekennzeichnet dadurch, dass** die Stütze (2 ; 19) von einer Reifenführung (5) gebildet wird.

## Claims

1. A wedge device (1; 18) for immobilising a vehicle in a loading/unloading location, comprising a carrier (2; 19) intended to be fixed to the ground, at the vicinity of the loading/unloading location, a beam assembly (3; 20) connected to the carrier (2; 19) and having a front end region and a rear end region opposed to each other in the longitudinal direction of the beam assembly (3; 20), and a wedge (4; 21) having an elongated, so-called stop part (12; 33) integral with a part (13; 32) for placing on the beam assembly (3; 20) such that, when the placing part (13; 32) is arranged on the beam assembly (3; 20), the stop part (12; 33) is located in a position in which it extends from the beam assembly (3; 20) and into the loading/unloading location to form a stop against which abuts a wheel (R) of a vehicle which has been arranged in the loading/unloading location, and means for blocking the position of the wedge (4; 21) on the beam assembly (3; 20) so as to prevent the vehicle from moving against the stop part (12; 33), the beam assembly (3; 20) being movable in translation with respect to the carrier (2; 19) in the longitudinal direction of the beam assembly (3; 20),
the immobilising wedge device (1; 18) being **characterized by** the fact that the placing part (13; 32) carries means for blocking by bracing on the beam assembly (3; 20), constituting the means for blocking the position of the wedge (4; 21) on the beam assembly (3; 20), in order to hold the wedge (4; 21) stationary with respect to the beam assembly (3; 20) when a force parallel to the longitudinal direction of the beam assembly (3; 20) and directed in the bracing direction is applied on the stop part (12; 33), thereby blocking in position the immobilising wedge device (1; 18), means (10, 11; 26) for limiting the movement of the beam assembly (3; 20) when applying said force being provided, unblocking the wedge (4; 21) being obtained by translation of the beam assembly (3; 20) along the longitudinal direction of the beam assembly (3; 20) and in the bracing direction.

2. The immobilising wedge device (1) according to claim 1, **characterized by** the fact that the beam assembly (3) is formed by a beam (8) with a parallelepiped cross-section, having an upper face (8a) directed opposite the ground after the carrier (2) is fixed to the ground, a lower face (8b) opposite the upper face (8a), and two opposed side faces (8c, 8d) connecting the upper (8a) and lower (8b) faces, and by the fact that the placing part (13) is formed by a bracket comprising a top plate (14), located on the upper face of the beam (8), and two wings (15) extending from the top plate (14), each wing (15) facing a respective face among both side faces (8c, 8d) of the beam (8) and having a so-called contact edge (15a) perpendicular to the top plate (14), the contact edges (15a) being offset from each other in the longitudinal direction of the beam (8) to allow the bracing of the placing part (13) on the beam (8) by contact of each of the contact edges (15a) with the respective side face (8c, 8d) of the beam (8).

3. The immobilising wedge device (1) according to claim 2, **characterized by** the fact that it comprises abutment means forming an abutment against the beam (8) to prevent the placing part (13) from being separated from the beam (8) by raising, the abutment means being preferably formed by the free end regions of each wing (15) which each terminate by a return (15b) perpendicular to the contact edge (15a) of said wing (15), the return (15b) being directed towards the other wing (15) and being located below the lower face (8b) of the beam (8).

4. The immobilising wedge device (1) according to claim 1, **characterized by** the fact that the beam assembly (20) is formed by two parallel planar profiles (23), facing and spaced from each other, and the placing part (32) of the wedge (21) is in the form of a plate (32) from a face of which the stop part (33) extends, preferably in a perpendicular manner, the plate (32) being vertically received in the gap formed between the two planar profiles (23) to allow the bracing of the placing part (32) on the beam assembly (20) by contact of each of the two vertical edges of the plate (32) with one respective of the planar profiles (23).

5. The immobilising wedge device (18) according to claim 4, **characterized by** the fact that the plate (32) forming the placing part (32) is provided with means (35a, 35b) for directing the plate (32) in a position facilitating a blocking of the wedge (21) by bracing, position in which the plate (32) is vertical, the vertical edge of the plate (32) which is located on the rear end region side of the beam assembly (20) is in contact with the planar profile (23) which is on the side from which the stop part (33) of the wedge (21) extends, and the vertical edge of the plate (32) which is located on the front end region side of the beam assembly (20) is in contact with the other planar profile (23).

6. The immobilising wedge device (1; 18) according to one of claims 1 to 5, **characterized by** the fact that the stop part (12; 33) is in the form of a bar, preferably made of titanium or titanium alloy.

7. The immobilising wedge device (1; 18) according to one of claims 1 to 5, **characterized by** the fact that the stop part is in the form of a blade having a curved face conformed to match the tread of the wheel (R) of a vehicle blocked by the immobilising wedge device (1; 18), the blade and the placing part (13; 32) being respectively preferably made of composite material and of titanium or titanium alloy.

8. The immobilising wedge device (1) according to one of claims 1 to 7, **characterized by** the fact that the limiting means (10, 11) are arranged to allow, when a force applied to the stop part (12) exceeds a given threshold value, the translation movement of the beam assembly (3) in the bracing direction, while allowing the bracing of the placing part (13) on the beam assembly (3).

9. The immobilising wedge device (1) according to claim 8, **characterized by** the fact that the limiting means (10, 11) are formed by a spring (10) one end of which is integral with the carrier (2) and the other end of which is integral with the beam assembly (3), the spring (10) being arranged to bias the beam assembly (3) in the direction opposite the bracing direction and prestressed to said threshold value, and/or formed by a cylinder (11) the body (11a) of which is integral with one of the carrier (2) and the beam assembly (3) and the head (11b) of which is integral with the other of the carrier (2) and the beam assembly (3), the cylinder (11) being driven to oppose the translation movement of the beam assembly (3) in the bracing direction when the force applied to the stop part (12) is lower than the threshold value and to allow the movement of the beam assembly (3) in the bracing direction when said force is higher than the threshold value.

10. The immobilising wedge device (1) according to one of claims 8 and 9, **characterized by** the fact that the beam assembly (3) is connected to the carrier (2) by connection means arranged such that a translation of the beam assembly (3) in the bracing direction causes the beam assembly (3) to simultaneously rotate, around the longitudinal axis thereof, towards the side opposite that from which the stop part (12) extends, while a translation of the beam assembly (3) in the direction opposite the bracing direction causes the beam assembly (3) to rotate towards the side from which the stop part (12) extends.

11. The immobilising wedge device (1) according to claim 10, taken in dependence of one of claims 2 and 3, **characterized in that**:
- the beam (8) is hollow and at least two openings are provided in the lower face (8b) of the beam (8);
- the carrier (2) comprises, for each said opening, a stud (6) extending inside the beam (8) by passing through the corresponding opening, and
- the means for connecting the beam assembly (3) to the carrier (2) being formed, for each stud (6), by two lug portions (7) at a same height and a pair of two lights (9) provided each in a respective side face (8c, 8d) of the beam, each lug portion (7) extending, in use, through a so-called active part (9b) of a respective light (9) for supporting and guiding in translation the beam (8), wherein the active part (9b) of the or each light (9) of the side face (9c) which is on the side from which extends the stop part (12) is angled downwards in the direction opposite the bracing direction, while the active part (9b) of the or each light (9) of the other side face (8b) is angled upwards in said direction opposite the bracing direction.

12. The immobilising wedge device (1; 18) according to one of claims 1 to 11, **characterized by** the fact that it further comprises means for controlling the translation movement of the beam assembly (3; 20) for unblocking the wedge (4; 21), said control means advantageously comprise a double acting cylinder (11) the body (11a) of which is integral with one of the carrier (2) and the beam assembly (3) and the head (11b) of which is integral with the other of the carrier (2) and the beam assembly (3), the cylinder (11) being directed such that the direction of the movement of the rod thereof is parallel to the longitudinal direction of the beam assembly (3) .

13. The immobilising wedge device (1; 18) according to one of claims 1 to 11, **characterized by** the fact that the carrier (2; 19) is formed by a wheel guide (5) .
